(19) Europäisches Patentamt
European Patent Office
Office européen des brevets

(11) **EP 1 672 774 A2**

(12) **EUROPEAN PATENT APPLICATION**

(43) Date of publication:
**21.06.2006 Bulletin 2006/25**

(51) Int Cl.:
***H02K 41/035*** (2006.01)

(21) Application number: **05257164.3**

(22) Date of filing: **21.11.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **15.12.2004 JP 2004362924**

(71) Applicant: **Tamron Co., Ltd.
Saitama-shi,
Saitama-ken (JP)**

(72) Inventor: **Noji, Takayoshi
Saitama-shi
Saitama-ken (JP)**

(74) Representative: **Skone James, Robert Edmund
Gill Jennings & Every LLP
Broadgate House
7 Eldon Street
London EC2M 7LH (GB)**

(54) **Actuator and lens unit and camera with the same**

(57)     The invention is directed to provide an actuator of simple structure and downsized body, and a lens unit and a camera having the same.

An actuator (1) comprises a fixed member (2), a movable member (4), a movable member supporting means for supporting the movable member relative to the fixed member, actuating coils (6) attached to either one of the fixed member and the movable member, actuating magnets (8) attached to the remaining one of the fixed member and the movable member so as to receive drive force when current flows in the actuating coils, magnetic sensors (12) disposed inside windings of actuating coils for detecting positions of the actuating magnets, and a control means (14) for controlling the drive current to flow in each of the actuating coils, in response to a command signal instructing where to move the movable member and position signals detected by the magnetic sensors.

## FIG.1A

# FIG.1B

**Description**

The present invention relates to an actuator, and a lens unit and a camera with the same.

Japanese Patent Preliminary Publication No. H03-186823 (referred to as Patent Document 1 as listed below) discloses an anti-vibration device that is useful to avoid image shaking. The anti-vibration device detects vibrations of a lens barrel and analyzes the detected vibrations to actuate the correcting lens in a plane in parallel with the film so as not to cause defocusing. In order to translate the correcting lens in a desired direction, the anti-vibrating device employs a fixture frame retaining the correcting lens, a first holder frame movably supporting the fixture frame in a first direction orthogonal to the optical axis, and a second holder frame fixed to the lens barrel and movably supporting the first holder frame in a second direction orthogonal to the optical axis and the first direction. Movements in the first and second directions orthogonal to each other are composed to permit the lens barrel to house the correcting lens so as to translate in a desired direction in a plane in parallel with the film. In addition to that, the anti-vibration device has dedicated linear motors actuating the correcting lens in first and second directions respectively, and obtaining a composite displacement with the motors enables the correcting lens to move in the desired direction. Additionally, the anti-vibration device includes a beam projector and a photoreceptor on the opposite sides of the fixture frame securely carrying the correcting lens, and these electronic devices are used to detect a position of the fixture frame to control the position of the correcting lens.

Also, Japanese Patent Preliminary Publication No. H10-26781 (Patent Document 2) discloses an anti-quivering compensation device used to avoid image shaking. The anti-quivering compensation device has magnets that are embedded in a frame supporting a correcting lens and are activated by coils attached to a fixed based plate so as to compensate for the image shaking. Movement of the supporting frame carrying the correcting lens is detected by hall devices located on the side opposed to the coils with the magnets intervening therebetween.

[REFERENCES]

Patent Document 1:
Japanese Patent Preliminary Publication No. H03-186823
Patent Document 2:
Japanese Patent Preliminary Publication No. H10-26781

In the actuator for the anti-vibration apparatus disclosed in Japanese Patent Preliminary Publication No. H03-186823, however, the varying position of the movable member are to be detected by the projectors and the photoreceptors located opposite to them to receive light from them, and also the movable element moving between them must be provided with a slit. Resultantly, the actuator, as a whole, has its architecture complicated and its dimensions increased, and the manufacturing cost is prone to increase.

On the other hand, when the varying position of the movable member is detected by means of magnetic sensors such as the hall devices as in the actuator for the anti-vibration compensation device disclosed in Japanese Patent Preliminary Publication No. H10-26781, magnetism from the actuating magnets can be used to detect the varying position in common, and hence, no additional element other than the hall devices is necessary for the position detection. With the magnetic sensors, however, the magnetic sensors must be located in positions where they are able to detect the magnetism from the actuating magnets while not affected by the magnetic field developed by the actuating coils. Hence, the actuator for the anti-vibration compensation apparatus disclosed in Japanese Patent Preliminary Publication No. H10-26781 is designed to have the hall devices and the actuating coils respectively located on the opposite sides of the actuating magnets. Because of this, the actuator, as a whole, adversely has its structure complicated and its dimensioned increased.

Alternative to the aforementioned architecture can have the magnetic sensors and the actuating coils disposed in the same plane, but, in such a case, these elements are sufficiently apart from each other so that the magnetic sensors are not affected by the magnetism from the actuating coils. Such isolation of the magnetic sensors from the actuating coils causes points of application of drive force from the actuating coils to be apart from points of measurement by the magnetic sensors, and this resultantly degrades an accuracy in positioning the actuator.

Accordingly, it is an object of the present invention to provide an actuator simplified in structure and downsized, and a lens unit and a camera with the same.

It is another object of the present invention to provide an actuator of the enhanced accuracy of positioning with a simplified structure, and a lens unit and camera having the same.

To provide solutions to the aforementioned prior art disadvantages, the actuator according to the present invention is comprised of an actuator comprising, a fixed member, a movable member, a movable member supporting means for supporting the movable member relative to the fixed member, an actuating coil attached to either one of the fixed member and the movable member, an actuating magnet attached to the remaining one of the fixed member and the movable member in positions so as to receive drive force when current flows in the actuating coils, a magnetic sensor disposed inside windings of the actuating coil for detecting positions of the actuating magnet, and a control means for controlling the drive current to flow in each of the actuating coil in response to a command signal instructing where to move the movable member and position signal detected by the magnetic sensor.

In the present invention thus configured, the control means receives the command signal to instruct where the movable member is to be moved. The control means controls the drive current to flow in the actuating coil, in response to the signal indicating the position and the position data detected by the magnetic sensor. When electric field is developed around the actuating coil as a result of the current flowing in the actuating coil, the actuating coil and the corresponding actuating magnet interact with each other. Such interacting force permits the movable member to move relative to the fixed member. A displacement of the movable member is detected by the position sensing means and the detection result is transferred to the control means.

In the actuator configured in this manner according to the present invention, since the magnetic sensors are inside the windings of the actuating coils, the actuator having a simplified structure successfully attain downsizing as a whole. The point of application of the drive force derived from the actuating coils are close to the positions detected by the magnetic sensors, and this brings about the enhanced accuracy in moving the movable member in position.

Additionally, another actuator according to the present invention is comprised of an actuator comprising, a fixed member, a movable member, a movable member supporting means for supporting the movable member so as to permit the movable member to move to an arbitrary position in a plane in parallel with the fixed member, at least three actuating coils attached to either one of the fixed member and the movable member, actuating magnets attached to the remaining one of the fixed member and the movable member in positions corresponding to the actuating coils, magnetic sensors disposed inside windings of the actuating coils for detecting relative positions of the actuating coils to the actuating magnets, and a control means for producing coil position command signals related to each of the actuating coils on the basis of a command signal to instruct where the movable member is to be moved, and for controlling the drive current to flow in each of the actuating coils in response to the coil position command signal and position signals detected by the magnetic sensors.

In the present invention thus configured, the control means receives the signal instructing where to move the movable member and, in response to this position command signal, the control means produces the coil position command signals related to each of the actuating coils. Moreover, the control means controls the drive current to flow in the actuating coils, in response to the coil position command signals and the position data detected by the magnetic sensors inside the coils. When the current flowing in the actuating coils develops magnetic field, the actuating coils and the corresponding actuating magnets interact with each other. Thus, the movable member is moved in the plane in parallel with the fixed member. A displacement of the movable member is detected by the magnetic sensors and transferred to the control means.

In accordance with the present invention configured in this way, since the magnetic sensors are inside the windings of the actuating coils, the actuator of a simplified structure can attain downsizing. Points of application of the drive force from the actuating coils are close to positions detected by the magnetic sensors, and therefore, the movable member can be moved with the enhanced accuracy.

In the present invention, preferably, the actuator further includes a compensating means for correcting the position signal(s) detected by the magnetic sensor(s) so as to eliminate effects upon the magnetic sensor(s) due to the magnetic field derived from the actuating coil(s).

In the present invention configured in this manner, since the compensation means compensates for adverse effects on the magnetic sensors by the magnetic field derived from the actuating coil(s), the magnetic sensor(s) can accurately detect the varying position of the movable member even though the magnetic sensor(s) is disposed inside the actuating coil(s).

In the present invention, preferably, the compensating means has a current sensing means for detecting current flowing in the actuating coil(s), and producing compensation signals from the current detected by the current sensing means so as to correct the position signal(s) detected by the magnetic sensor(s).

Further in the present invention, preferably, the current to flow in the actuating coil(s) is pulse width modulated or pulse density modulated, and the compensating means has a smoothing means for smoothing the pulse width modulated current or the pulse density modulated current detected by the current sensing means to produce the compensation signal(s).

In accordance with the present invention thus configured, the movable member can be moved at the enhanced energy efficiency.

Additionally, the lens unit according to the present invention is comprised of a lens barrel, a photographing lens housed in the lens barrel, a fixed member secured to the lens barrel, a movable member carrying an image stabilizing lens, a movable member supporting means for supporting the movable member so as to permit the movable member to move to an arbitrary position in a plane in parallel with the fixed member, at least three actuating coils attached to either one of the fixed member and the movable member, actuating magnets attached to the remaining one of the fixed member and the movable member in positions corresponding to the actuating coils, magnetic sensors disposed inside windings of the actuating coils for detecting relative positions of the actuating magnets to the actuating coils, a vibration sensing means for detecting vibrations of the lens barrel, a signal generating means for producing a lens position command signal to instruct where the image stabilizing lens is to be moved on the basis of a detection signal from the vibration sensing means, and a control means for producing coil position command signals related to each of the actuating coils on the basis of the lens position command signal from the signal generating means, and for controlling the drive current to flow in each of the actuating coils in response to the coil position command signals and position signals detected by the magnetic sensors.

Furthermore, the camera according to the present invention has the lens unit according to the present invention.

In accordance with the present invention, provided are a downsized actuator of a simplified structure, and a lens unit and a camera having the same.

Also, in accordance with the present invention, provided are an actuator simplified in structure and enhanced in positioning accuracy, and a lens unit and a camera having the same.

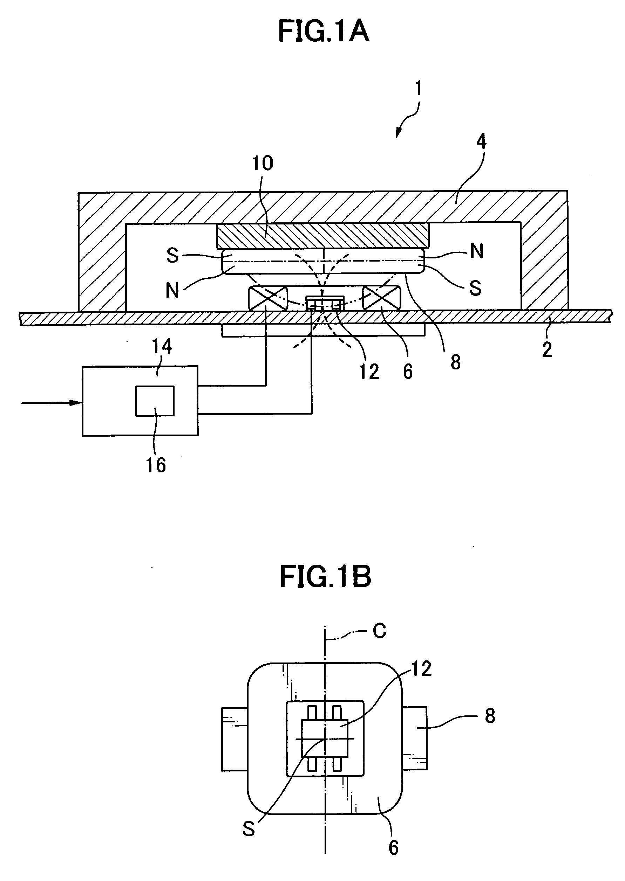

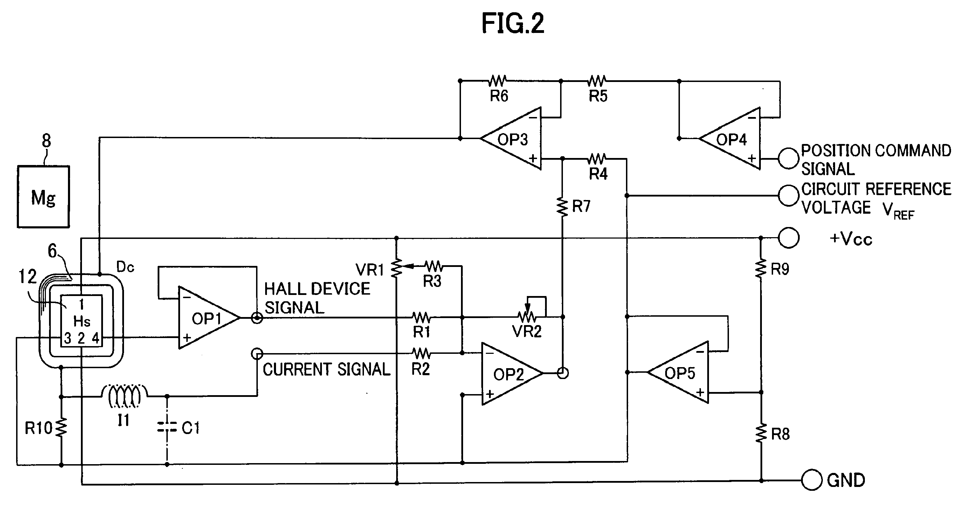

With reference to the accompanying drawings, preferred embodiments of the present invention will be described. First, referring to Figs. 1 and 2, a first embodiment of the actuator according to the present invention will be described. Fig. 1(a) is a side view showing the first embodiment of actuator while Fig. 1(b) is a bottom view of the actuator having its fixed plate removed. Fig. 2 is a diagram illustrating an example of control circuitry in the actuator in this embodiment.

As can be seen in Fig. 1, the actuator 1 has a fixed member or a fixed plate 2, and a movable member or a movable frame 4 slidably supported on the fixed plate 2. The actuator 1 has an actuating coil 6 attached on the fixed plate 2, an actuating magnet 8 provided in position corresponding to the actuating coil 6 on the movable frame 4, and a back yoke 10 directing magnetism from the actuating magnet 8 to the actuating coil 6. In order to detect the position of the movable frame 4, a magnetic sensor or a hall device 12 is mounted inside windings of the actuating coil 6. The actuator 1 also has a control means or a controller 14 that is able to let current flow in the actuating coil 6 in response to the position signal detected by the hall device 12 and command signals.

The movable frame 4 is slidably supported on the fixed plate 2 in lateral directions in Fig. 1, and its movement in directions perpendicular to the plane of the drawing sheet of Fig. 1 is restricted. Also, the movable frame 4 is in shape that enables it to support the back yoke 10 and the actuating magnet 8 a certain distance away from the actuating coil 6. In this embodiment, the movable frame 4 also serves as a movable member supporting means.

As shown in Fig. 1(b), the actuating coil 6 is approximately rectangularly shaped coil that is made of lead wire wound on an approximately rectangular reel frame (not shown) and is attached to the fixed plate 2. When current flows in the windings of the actuating coil 6, electric field is developed as roughly denoted in broken line in Fig. 1(a).

The actuating magnet 8 is attached to the bottom side of the movable frame 4 with the back yoke 10 intervening between them. Also, as can be seen in Fig. 1(a), the actuating magnet 8 is magnetized so that its left half facing the actuating coil 6 assumes a polarity of North (N) and its right half facing the same assumes another polarity of South (S) while its right half facing the back yoke 10 assumes the polarity $N$ and its left half facing the same assumes the polarity S. Thus, the actuating magnet 8 has its magnetic neutral axis passes the midpoints of the longer sides of the rectangular actuating magnet 8. Also, the actuating magnet 8 has its magnetic flux deflected by the back yoke 10 attached between the movable frame 4 and the actuating magnet 8, giving a distribution like line as depicted by two-dot hyphen line in Fig. (a). In this embodiment, the term "magnetic neutral axis C" is referred to as the line connecting transit points from one polarity to another dominated by S- and $N$- poles as which the opposite ends of the actuating magnet 8 are defined.

As shown in Fig. 1(b), the hall device 12 is surrounded by the windings of the actuating coil 6, overlying the actuating magnet 8 in alignment with each other. The hall device 12 is adapted to detect the magnetic flux from the actuating magnet 8 and measure the position of the movable frame 4. The hall device 12, when positioned in the magnetic neutral axis C of the actuating magnet 8, produces output of naught, and as the movable frame 4 moves in the lateral directions in conjunction with Fig. 1(a), its output signal is varied into a shape of sine waves whereas the output signals from the hall device 12 are approximately in proportion to a displacement of the movable frame 4 in an actual range of the movement by the movable frame 4.

The controller 14 is designed to control the current to flow in the actuating coil 6 in response to a command signal indicating where the movable frame 4 is to be moved and a position signal detected by the hall device 12, thereby moving the movable frame 4 to the position as instructed in the command signal. The controller 14 has a compensation circuit 16 incorporated therein so as to serve as a compensating means and eliminate effects of the magnetic field developed by the actuating coil, from the signal detected by the hall device 12.

Next, referring to Fig. 2, an example of the embodied circuitry of the controller 14 will be described. Fig. 2 gives an example of a circuit that controls the current to flow in the actuating coil 6. In the circuit in Fig. 2, accompanying circuits, such as power supply line, that are necessary to activate operational amplifiers are omitted. First, as will be recognized in Fig. 2, supply voltage $+V_{CC}$ and the ground potential GND are connected along with electrical resistances R8 and R9 in series between them. An operational amplifier OP5 has its positive input terminal connected between the electrical resistances R8 and R9. The operational amplifier OP5 has its negative input terminal connected to an output terminal of the operation amplifier OP5. In this way, the resistances R8 and R9 permit voltage at the output terminal of the operational amplifier OP5 to reach and retain the level of the reference voltage $V_{REF}$ between the supply voltage

+$V_{CC}$ and the ground potential GND.

On the other hand, the supply voltage +$V_{CC}$ is applied between first and second terminals of the hall device 12. A third terminal of the hall device 12 is connected to the reference voltage $V_{REF}$. In this manner, as magnetism affecting the hall device 12 is varied, a fourth terminal of the hall device 12 accordingly varies its voltage level between the levels of +$V_{CC}$ and GND.

The hall device 12 has its fourth terminal connected to a negative input terminal of an operational amplifier OP1. The operational amplifier OP1 has its output terminal connected to a negative input terminal of the operational amplifier OP1, and it serves as a buffer amplifier for output signals from the hall device 12. The operation amplifier OP1 has its output terminal also connected to a minus input terminal of an operational amplifier OP2 with the electrical resistance R1 intervening therebetween.

A variable resistance VR1 has its opposite fixed terminals connected to +$V_{CC}$ and GND, respectively. The variable resistance VR1 has its movable terminal connected to a minus input terminal of the operational amplifier OP2 with an intervening electric resistance R3. Regulating the variable resistance VR1 permits offset voltage of an output from the operational amplifier OP2 to be adjusted. The operational amplifier OP2 has its output terminal connected to the minus input terminal with a variable resistance VR2 intervening between them. Regulating the variable resistance VR2 permits gain of the operational amplifier OP2 to be adjusted. Additionally, the operational amplifier OP2 has its plus input terminal connected to the reference voltage $V_{REF}$.

The position command signal instructing where to move the movable frame 4 is received at the plus input terminal of an operational amplifier OP4. The operational amplifier has its output terminal connected to its minus input terminal. Thus, the operational amplifier OP4 serves as a buffer amplifier for the position command signal.

The operational amplifier OP4 has its output terminal connected to a minus input terminal of an operational amplifier OP3 with an electric resistance R5 intervening therebetween. The operational amplifier OP3 has its output terminal connected to the minus input terminal of the operational amplifier OP3 with an intervening electric resistance R6. The operational amplifier OP2 has its output terminal connected to a plus input terminal of the operational amplifier OP3 with an intervening electric resistance R7, and also the reference voltage $V_{REF}$ is connected to the plus input terminal of the operational amplifier OP3 with an electric resistance R4 intervening between them. Thus, a difference between the output from the hall device 12 and the position command signal is produced from the output terminal of the operational amplifier OP3. Additionally, the electric resistances R4 to R7 together determine gain of the operational amplifier OP3.

The operational amplifier OP3 has its output terminal connected to one of the opposite ends of the actuating coil 6, and the other end of the actuating coil 6 is connected to the reference voltage $V_{REF}$ with an intervening a current sensing means or electric resistance R10. In this embodiment, the current sensing electric resistance R10 has a preset value of 0.1 Ω. Thus, the current derived from an approximate voltage difference between the output from the operational amplifier OP3 and the reference voltage $V_{REF}$ flows in the actuating coil 6. The current flowing in the actuating coil 6 develops magnetic field, and this causes magnetic force to give effects on the actuating magnet 8, which eventually brings about a displacement of the actuating magnet 8. Such magnetic force is directed to let the actuating magnet 8 to come close to a position as instructed in the coil position command signal. Once the actuating magnet 8 is moved, the voltage output from the fourth terminal of the hall device 12 is varied. When the actuating magnet 8 reaches the position designated in the coil position command signal, the voltages supplied to the positive and negative input terminals of the operational amplifier OP3 become equal to each other, and the current no longer flows in the actuating coil 6.

The magnetic field developed through the current flowing in the actuating coil, as shown in Fig. 1(a), appears around the actuating coil 6. Such magnetic field affects the output from the hall device 12 inside the windings of the actuating coil 6. To eliminate the adverse effects of the magnetic field on the output signal from the hall device 12, the current flowing in the actuating coil 6 should be detected. Specifically, an electrical resistance R10, which is used to detect the current and has one of its terminals connected to the actuating coil 6, has that terminal also connected to the minus input terminal of the operational amplifier OP2 with an electric resistance R2 intervening between them. Giving an appropriate preset value to the electric resistance R2 and an electric resistance R1 connected between an output of the operational amplifier OP1 and the minus input terminal of the operational amplifier OP2, respectively, the adverse effects due to the magnetic field developed by the actuating coil 6 can be eliminated.

For instance, it is now assumed that once the actuating magnet 8 is moved apart from the actuating coil 6 so that the magnetic line of flux from the actuating magnet 8 no longer produces the effects upon it, letting the current of 50 mA flow in the actuating coil 6 causes the hall device 12 to develop output voltage $v_{ih}$ of - 1.5 mV relative to the reference voltage $V_{REF}$. The same voltage $v_{ih}$ appears at an output terminal of the operational amplifier OP1 when an input is applied to it serving as a buffer amplifier. On the other hand, the current of 50 mA flowing in the actuating coil 6 also causes the voltage $v_i$ of +5 mV relative to the reference voltage $V_{REF}$ at the terminal of the current sensing electric resistance R10 connected to the actuating coil 6. Setting the rate of the resistance R1 to the resistance R2 at that of the absolute value of the voltage $v_{ih}$ to the absolute value of the voltage $v_i$, the output from the hall device 12, which is resulted from the effects of the magnetic field developed by the actuating coil 6, can be cancelled. Thus, the electric resistances R1 and R2 preset at the determined level, the output voltage from the hall device 12 derived from the magnetic field around the actuating coil 6 becomes equal to the terminal voltage at the electric resistance R10 although the plus and minus algebraic signs are reversed to each other, and both the voltages, as a result of being added at the minus input terminal of the operational amplifier OP2, are cancelled to be naught. In this embodiment, the electric resistance R1 is at a level of 1 kΩ while the electric resistance R2 assumes 3.33 kΩ.

Further, in practice, the magnetism from the actuating magnet 8 is superposed with that from the actuating coil 6 and the output voltage corresponding to the superposed magnetism is produced from the hall device 12. Thus, in the case that the hall device 12 is influenced by the magnetisms from both the actuating magnet 8 and the actuating coil 6, only components of the magnetism derived from the actuating coil 6 are cancelled, a signal in proportion to the displacement of the actuating magnet 8 is produced from the output terminal of the operational amplifier OP2. In this embodiment according to the present invention, the electric resistances R1, R2 and R10 and the operational amplifier OP2 together function as a compensation circuit 16. Also, in this embodiment, the signal input from the electric resistance R10 to the operational amplifier OP2 via the electric resistance R2 serves as a compensation signal that corrects the signal produced from the hall device 12.

The level 0.1 Ω across the current sensing electric resistance R10 is sufficiently lower than the levels of the resistances R1 and R2, 1 kΩ and 3.33 kΩ, and therefore, is negligible, and a variation in the terminal voltage of the resistance R10 because of the connection to the resistance R2 is also negligible. In addition, the voltage applied to the minus input terminal of the operational amplifier OP2 via the electric resistance R1 may sometimes be given effects by the offset voltage of the operational amplifier OP1. To avoid the effects, the operational amplifier OP1 can be removed to connect the hall device 12 directly to the resistance R1. In this case, however, coefficients of the electric resistances R1 and R2 should be determined, taking account of the internal resistance of the hall device 12.

Now, the operations of the actuator 1 in this embodiment according to the present invention will be described. First, the movable frame 4 is in its initial position where the center of sensitivity S of the hall device 12 is in the magnetic neutral axis C of the actuating magnet 8, and when the controller 14 does not receive the position command signal, the operational amplifier OP3 has its plus and minus input terminals kept identical in potential, resulting in no current flowing in the actuating coil 6. When the position command signal is received by the controller 14, the potential at the minus input terminal of the operational amplifier OP3 is varied, and this causes voltage at the output terminal of the operation amplifier OP3, resultantly causing the current to flow in the actuating coil 6. The current flowing in the actuating coil 6 urges the actuating magnet 8 to move. Such drive force to the actuating magnet 8 makes the movable frame 4 come closer to the position as instructed in the position command signal.

When the movable frame 4 is moved from its initial position, the center of sensitivity S of the hall device 12 is deviated from the magnetic neutral axis C of the actuating magnet 8, and this causes the hall device 12 to produce an output signal. Since the hall device 12 is affected by the magnetic field developed around the actuating coil 6, the output signal from the hall device 12 contains components of the magnetic field derived from the actuating coil 6. On the other hand, when the current flows in the actuating coil 6, voltage as a current signal is generated at the terminal of the current sensing electric resistance R10 connected to the actuating coil 6.

The output signal from the hall device 12 and the current signal are added to each other at the minus input terminal of the operational amplifier OP2 after respectively transferred through the electric resistances R1 and R2, and the components, which are contained in the output signal from the hall device and are affected by the magnetic field around the actuating coil 6, are cancelled. The resultant signal, which is a remaining portion of the output signal from the hall device 12 after the elimination of the components affected by the magnetic field, is first amplified by the operational amplifier OP2 and then applied to the plus input terminal of the operational amplifier OP3.

As the movable frame 4 is moved closer to the position as instructed in the position command signal, the output signal from the hall device 12 is varied, and therefore, the potential difference between the plus and minus input terminals of the operational amplifier OP3 is decreased. Moreover, as the movable frame 4 reaches the position instructed in the position command signal, the potential difference between the plus and minus input terminals of the operational amplifier OP3 becomes naught, and the current flowing in the actuating coil 6 becomes naught. In the case that the position command signal is altered, or that the external disturbance causes the movable frame 4 to be deviated from the position as instructed in the position command signal, the current resumes flowing in the actuating coil 6, resulting in the movable frame 4 moving in the position as instructed in the position command signal. Repeating these steps of the electronic process, the movable frame 4 can be moved following the indication of the position command signal.

With the actuator in this embodiment according to the present invention, the displacement of the actuating magnet can be detected by the hall device disposed inside the windings of the actuating coil, and thus, the downsized actuator can be attained with a simplified structure. Thus, in this actuator, a dead space inside the windings of the actuating coil in the prior art embodiments is used to locate the hall device, and in this way, an efficient use of the space can be attained as well as the downsizing of the actuator.

Also, in the actuator in this embodiment according to the present invention, since the displacement of the actuating magnet is detected by the hall device inside the windings of the actuating coil, the detected point by the hall device and the center point of the drive force induced by the actuating coil are coincidental with each other, and hence, the varied position of the movable frame can be accurately detected.

In this actuator, moreover, since the compensation circuit is used to eliminate the effects the magnetic field derived from the actuating coil produces upon the hall device, the hall device, although positioned inside the actuating coil, can detect the position of the movable frame accurately.

In the aforementioned embodiment, the movable frame is slidable on the fixed plate, and alternatively, it can be supported by any type of a movable member supporting means such as a linear bearing, roller, or the like.

Further, although, in the aforementioned embodiment, the current to flow in the actuating coil is controlled by means of analogue variation of voltage applied to the actuating coil, high-frequency pulses modulated by PWM (pulse width modulation) or PDM (pulse density modulation) can be applied to the actuating coil. In such a case, the terminal voltage at the current sensing resistance R10 connected to the actuating coil is varies in shape like pulses, and hence, a capacitor C1 and/or a coil I1 serving as a pulse smoothing means as depicted in phantom line in Fig. 2 are interposed to produce a current signal. Thus, adding the capacitor C1 and/or the coil I1 to the compensation circuit so as to function as a low pass filter, the pulse shaped waveform is demodulated, and resultantly produced is the current signal similar in shape to that obtained by applying voltage to the actuating coil in the analog manner. In this modified embodiment, energy efficiency in driving the movable frame can be improved.

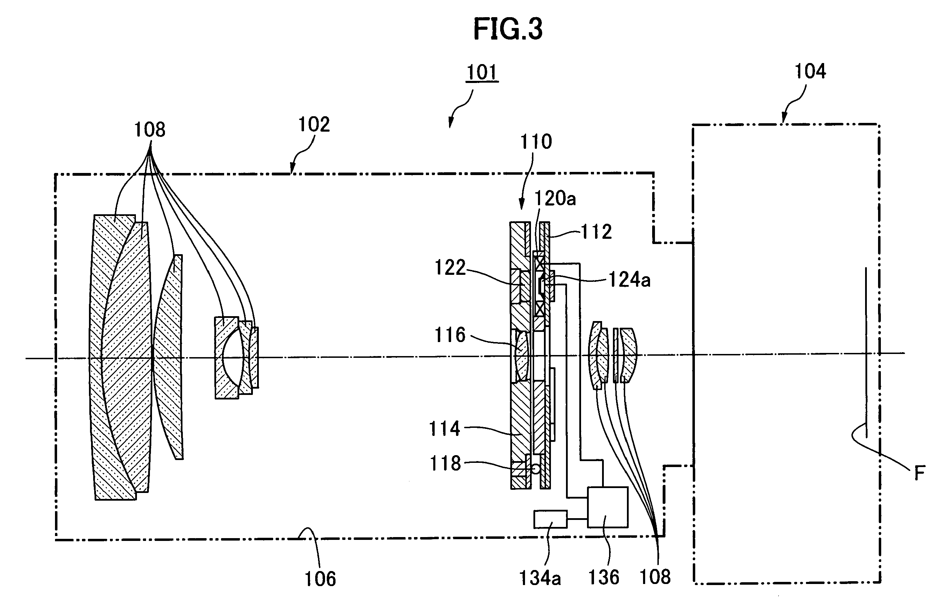

Referring to Fig. 3 to Fig. 12, a camera of second embodiment according to the present invention will be described. This embodiment of the camera incorporates therein a drive mechanism for an image stabilizing lens which is an application of the aforementioned embodiment of the actuator according to the present invention.

Fig. 3 is a sectional view of the camera of this embodiment of the present invention. As will be recognized in Fig. 3, the exemplary camera of the present invention denoted by reference numeral 101 consists of a lens unit 102 and a camera body 104. The lens unit 102 includes a lens barrel 106, a plurality of photographing lenses 108 housed in the lens barrel 106, an actuator 110 moving an image stabilizing lens 116 in a predetermined plane, and gyros 134a, 134b respectively serving as vibration sensing means to detect vibrations of the lens barrel 106 (the gyro 134a alone is shown in Fig. 3). The camera 101 uses the gyros 134a, 134b to detect the vibrations, and in response to the detection results, the actuator 110 works to move the image stabilizing lens 116 to obtain a stabilized image focused in a film plane F within the camera body 104. In this embodiment, a piezoelectric vibration gyro is used for the gyros 134a, 134b, respectively. Also, in this embodiment, the image stabilizing lens 116 is made of a piece of lens, and alternatively, it may be of a group of more than one lenses. Hereinafter, the term of the "image stabilizing lens" covers both a piece of lens and a group of lenses used to stabilize an image.

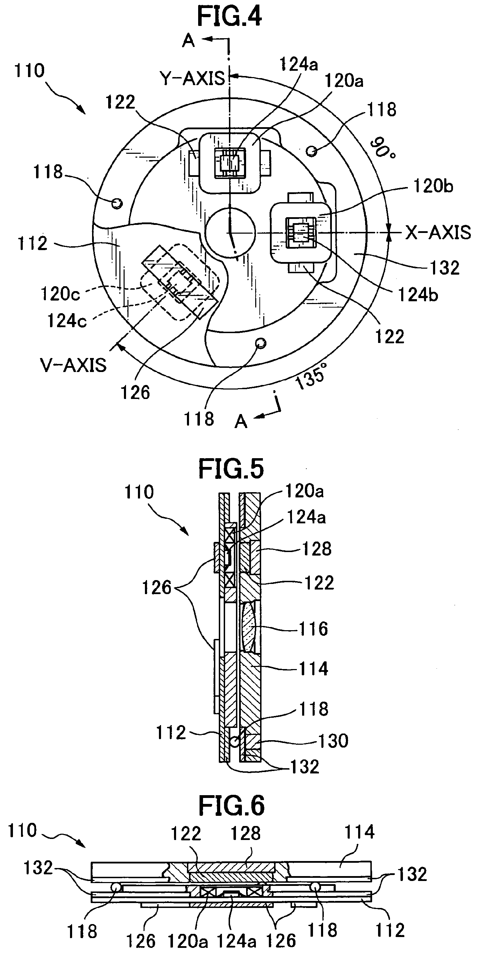

Next, referring to Figs. 4 to 6, the actuator 110 will be described in detail. Fig. 4 is a frontal partial sectional view of the actuator 110, Fig. 5 is a cross-sectional view taken along the line A-A in Fig. 4, and Fig. 6 is a top partial sectional view of the same. Fig. 4 is a depiction of the actuator 110 viewed on the side of the film plane F in Fig. 3, illustrating a fixed plate 112 partially cut away, and simply for the convenience of understanding, this view is referred to as the "frontal view" hereinafter. As will be recognized in Figs. 4 to 6, the actuator 110 has the fixed plate 112 or a fixed member secured inside the lens barrel 106, a movable frame 114 or a movable member movably supported relative to the fixed plate 112, and three steel balls 118 supporting the movable frame 114 and serving as a supporting means for the movable member. The actuator 110 further has three actuating coils 120a, 120b, 120c attached to the fixed plate 112, three actuating magnets 122 attached to the movable frame 114 in respectively corresponding positions to the actuating coils 120a, 120b, 120c, and magnetic sensors 124a, 124b, 124c, namely, position sensing means disposed inside the actuating coils 120a, 120b, 120c, respectively. The actuator 110 is also provided with take-up yokes 126 mounted on the fixed plate 112 to let the magnetic force of the actuating magnets attract the movable frame 114 to the fixed plate 112, and provided with a back yoke 128 mounted on a reverse side of each of the actuating magnets 122 to effectively propagate the magnetism of the actuating magnets toward the fixed plate 112. The actuator 110 additionally includes an attracting magnet 130 pulling the steel balls 118 onto the movable frame 114 and steel ball contacts 132 mounted on both the fixed plate 112 and the movable frame 114 so as to smoothly roll the steel balls 118 between the fixed plate 112 and the movable frame 114. The actuating coils 120a, 120b, 120c and the actuating magnets 122 disposed in the corresponding positions to them together compose a driving means that enables the movable frame 114 to translate and rotate relative to the fixed plate 112.

Moreover, as shown in Fig. 3, the actuator 110 has a control means or a controller 136 controlling current to flow in the actuating coils 120a, 120b, 120c, respectively on the basis of vibrations detected by the gyros 134a, 134b and the position data of the movable frame 114 sensed by the magnetic sensors 124a, 124b, 124c.

The lens unit 102 is attached to the camera body 104 in order to focus incident light beams and form an image on the film plane F.

The lens barrel 106 shaped approximately in a cylinder holds a plurality of photographing lens 108 inside and allows for part of the photographing lens 108 to move, thereby adjusting a focus.

The actuator 110 causes the movable frame 114 to move in a plane in parallel with the film plane F relative to the fixed plate 112 secured to the lens barrel 106, and this, in turn, causes the image stabilizing lens 116 on the movable frame 114 to move, so as to avoid shaking of the image formed on the film plane F even when the lens barrel 106 is vibrated. The fixed plate 112 is shaped approximately in a doughnut with three of the actuating coils 120a, 120b, 120c residing thereon. As can be seen in Fig. 4, the actuating coils 120a, 120b, 120c are disposed on a circle having its center identical with the optical axis of the lens unit 102. In this embodiment, the actuating coil 120a is located vertically above the optical axis, the actuating coil 120b is located horizontally along the optical axis, and the actuating coil 120c is located 135 degrees of the central angle away from the actuating coils 120a and 120b, respectively. Thus, adjacent ones of the actuating coils, 120a and 120b, 120b and 120c, and 120c and 120a, are separated from each other by 90 degrees of the central angle, 135 degrees of the central angle, and 135 degrees of the central angle, respectively, in order. The actuating coils 120a, 120b, 120c have their respective windings rounded square in shape, and these coils are disposed so that their respective center lines of the rounded squares are directed to radial direction of the circle on which the coils are disposed.

The movable frame 114 is shaped roughly in a donut and is located in parallel with the fixed plate 112, overlying the same. In a center aperture of the movable frame 114, the image stabilizing lens 116 is fitted. The rectangular actuating magnets 122 are embedded on the circle on the movable frame 114, and disposed in positions corresponding to the actuating coils 120a, 120b, 120c, respectively. Hereinafter, "positions corresponding to the actuating coils" are referred to as the positions substantially affected by the magnetic field developed by the actuating coils. Each of the actuating magnets 122 has its reverse side provided with a rectangular back yoke 128 so that the magnetic flux from the actuating magnet 122 can be efficiently disposed toward the fixed plate 112.

On a reverse side of each actuating coil on the fixed plate 112, namely, on the opposite side of the movable frame 114, a rectangular attracting yoke 126 is attached. The movable frame 114 is attracted onto the fixed plate 112 due to the magnetic force propagating from each actuating magnet 122 onto the corresponding attracting yoke 126. In this embodiment, the magnetic line of force from the actuating magnet 122 efficiently reaches the attracting yoke 126 because the fixed plate 112 is formed of non-magnetic material.

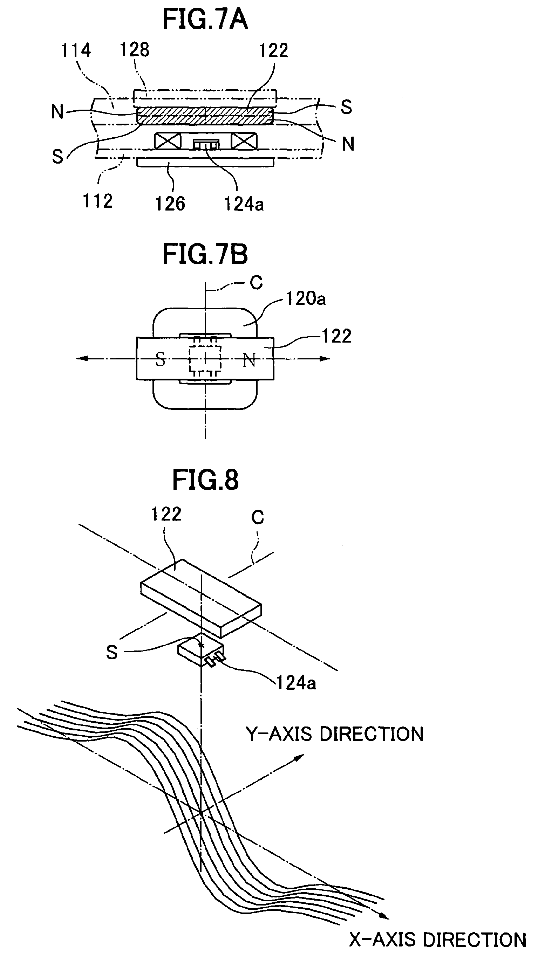

Fig. 7(a) is a partial enlarged top plan view showing positional relations among the actuating coil 120a, the corresponding ones of the actuating magnets 122, the back yokes 128, and the attracting yokes 126, and Fig. 7(b) is a partial enlarged frontal plan view. As can be seen in Fig. 4 and Figs. 7(a) and 7(b), the actuating magnet 122, the back yoke 128, and the attracting yoke 126, which are all shaped in a rectangle, have their respective longer sides extended along one another while having their respective shorter sides similarly extended along one another. Also, the actuating coil 120a has its sides laid in parallel with the longer and shorter sides of the corresponding one of the rectangular back yoke 128. The actuating magnets 122 have their respective magnetic neutral axes C coincide with radii of the circle on which the actuating magnets 122 are disposed. In this manner, the actuating magnets 122 receive the drive force in tangential directions to the circle as the current flows in the corresponding actuating coils. The remaining actuating coils 120b, 120c are laid in the similar positional relations with their respective corresponding ones of the actuating magnets 122, the back yokes 128, and the attracting yokes 126. Hereinafter, the terms "magnetic neutral axis C" mean the line connecting transit points from one polarity to another dominated by S- and N- poles which are defined as the opposite ends of the actuating magnet 122. Thus, in this embodiment, the magnetic neutral axis C passes the midpoints of the longer sides of the rectangular actuating magnet 122. Also, as shown in Fig. 7(a), the actuating magnet 122 has its polarities varied in the depthwise direction as well, where the lower left and the upper right in Fig. 7(a) assume the polarity of South (S) while the lower right and the upper left exhibit the polarity of North (N).

As will be recognized in Figs. 4 to 7, the actuating coils 120a, 120b, 120c respectively surround the magnetic sensors 124a, 124b, and 124c. Each of the magnetic sensors has the center of sensitivity S positioned in the magnetic neutral axis C of the actuating magnet 122 when the movable frame 114 is in its neutral position. In this embodiment, a hall element is used for the magnetic sensor.

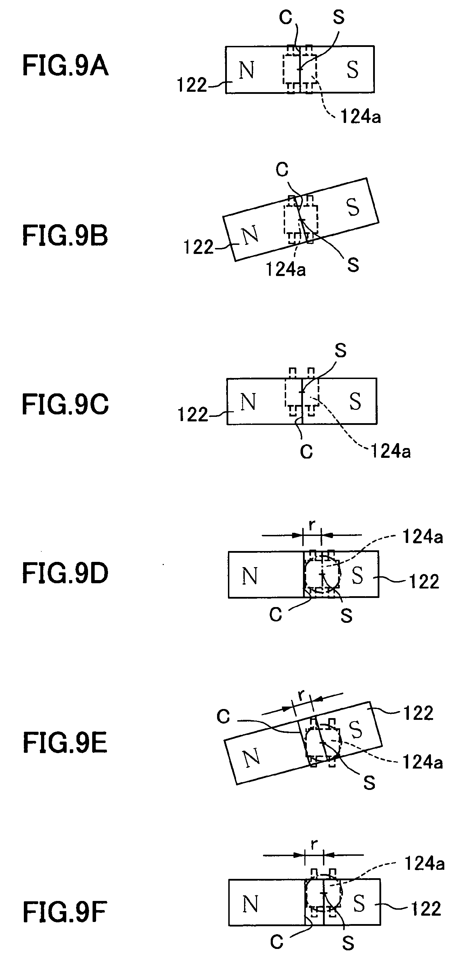

Figs. 8 and 9 are diagrams illustrating relations of a displacement of the actuating magnet 122 and a signal generated from the magnetic sensor 124a. As shown in Fig. 8, when the center of sensitivity S of the magnetic sensor 124a is in the magnetic neutral axis C of the actuating magnet 122, the output signal from the magnetic sensor 124 is at a level of naught. As the movable frame 114 is moved along with the actuating magnet 122 thereon to resultantly deviate the center of sensitivity S of the magnetic sensor 124a from the magnetic neutral axis, the output signal from the magnetic sensor 24a varies. As shown in Fig. 8, when the actuating magnet 122 is moved in directions along the X-axis, namely, in the directions orthogonal to the magnetic neutral axis C, the magnetic sensor 124a produces a sinusoidal signal. Thus, when the displacement is minute, the magnetic sensor 124a generates a signal approximately in proportion to the displacement of the actuating magnet 122. In this embodiment, when the displacement of the actuating magnet 122 falls within a range less than 3 % of the longer side of the actuating magnet 122, the signal output from the magnetic sensor 124a is approximately in proportion to the distance from the center of sensitivity S of the magnetic sensor 124a to the magnetic neutral axis C. Also, in this embodiment, the actuator 10 effectively works so far as the outputs from the magnetic sensors are approximately in proportion to the distance.

As will be recognized in Figs. 9(a) to 9(c), when the magnetic neutral axis C of the actuating magnet 122 lies in the center of sensitivity S of the magnetic sensor 124a, the output signal from the magnetic sensor 124a is at the level of naught either in the case of Fig. 9(b) where the actuating magnet 122 is rotated or in the case of Fig 9(c) where the actuating magnet 122 is moved in directions along the magnetic neutral axis C. Moreover, as shown in Figs. 9(d) to 9 (f), when the magnetic neutral axis C of the actuating magnet 122 deviates from the center of sensitivity S of the magnetic sensor 124a, a signal output from the magnetic sensor 124a is that which is in proportion to a radius $r$ of a circle of which center is equivalent to the center of sensitivity $S$ and with which the magnetic neutral axis C of the actuating magnet 122 is tangential. Thus, for the identical radius r of the circle to which the magnetic neutral axis C of the actuating magnet 122 is tangential, signals at the same level are produced from the magnetic sensor 124a in any of the cases as in Fig. 9(d) where the actuating magnet 122 is moved in the directions orthogonal to the magnetic neutral axis C, as in Fig. 9 (e) where the actuating magnet 122 is translated and rotated, and as in Fig. 9(f) where the actuating magnet 122 is translated in an arbitrary direction.

Although embodiments in terms of the magnetic sensor 124a has been described herein, the remaining magnetic sensors 124b, 124c produce the similar signals under positional relations with the corresponding actuating magnets 122, as well. Hence, analyzing the signals detected by the magnetic sensors 124a, 124b, 124c, respectively, enables to specify the position of the movable frame 114 relative to the fixed plate 112 after the translation and rotation movements.

As can be seen in Fig. 4, three of the steel balls 118 are disposed on the outer circle from the one on which the actuating coils of the fixed plate 112 are disposed. The steel balls 118 are separated from each other at an interval of 120-degree central angle, with one of the steel balls 118 being disposed between the actuating coils 120a and 120b. As depicted in Fig. 5, the steel balls 118 are attracted to the movable frame 114 by virtue of the attracting magnets 130 embedded in positions corresponding to the steel balls 118, respectively. The steel balls 118 are thus attracted to the movable frame 114 by the attracting magnets 130 while the movable frame 114 is attracted to the fixed plate 112 by the activating magnets 122, and resultantly, the steel balls 118 are sandwiched between the fixed plate 112 and the movable frame 114. This enables the movable frame 114 to be supported in the plane in parallel with the fixed plate 112, and the rolling of the steel balls 118 held between these two members permits the movable frame 114 to translate and rotate relative to the fixed plate 112 in an arbitrary direction.

The steel ball contacts 132 are mounted on both the fixed plate 112 and the movable frame 114 in their respective outer peripheries. When the movable frame 114 is moved with the steel balls 118 being sandwiched between the fixed plate 112 and the movable frame 114, the steel balls 118 roll on the steel ball contacts 132. Thus, the relative movement of the movable frame 114 to the fixed plate 112 would not cause friction due to either of the members sliding on each other. Preferably, the steel ball contacts 132 are finished in smooth surfaces and made of material having high surface hardness so as to reduce resistance of the steel balls 118 to the steel ball contacts 132 due to the rolling of the steel balls.

Furthermore, in this embodiment, the steel ball contacts 132 are made of non-magnetic material so that magnetic line of force from the attracting magnet 130 efficiently reaches the steel balls 118. Also, in this embodiment, although the steel spheres are used for the steel balls 118, they are not necessarily spherical objects. Thus, they can be replaced with any alternatives that have their respective contact surfaces with the steel ball contacts 132 generally spherical. Such forms are referred to as a "spherical member" in this application.

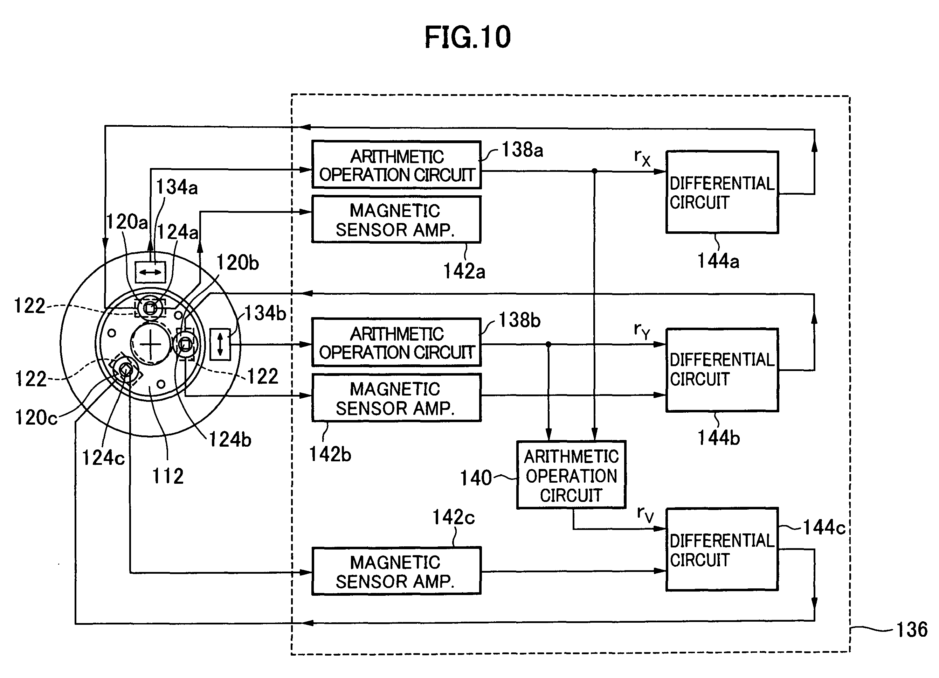

Then, referring to Fig. 10, the control of the actuator 10 will be described. Fig. 10 is a block diagram showing a system architecture for the signal processing in a controller 136. As can be seen in Fig. 10, vibrations of the lens unit 102 is detected by two of the gyros 134a, 134b momentarily, and the detection results are transferred to arithmetic operation circuits 138a, 138b or lens position command signal generating means built in the controller 136. In this embodiment, the gyro 134a is adapted to sense an angular acceleration of the yaw motion of the lens unit 102 while the gyro 134b is adapted to sense the angular acceleration of the pitching motion of the lens unit.

The arithmetic operation circuits 138a, 138b, upon receiving the angular acceleration from the gyros 134a, 134b momentarily, produce command signals instructing the time-varying position to which the image stabilizing lens 116 is to be moved. Specifically, the arithmetic operation circuit 138a twice integrates the angular acceleration of the yawing motion detected by the gyro 134a in the time quadrature process and adds a predetermined correction signal to obtain a horizontal component of the lens position command signal, and similarly, the arithmetic operation circuit 138b arithmetically produces a vertical component of the lens position command signal from the angular acceleration of the pitching motion detected by the gyro 134b. The lens position command signal obtained in this manner is used to time-varyingly move the image stabilizing lens 116, so that an image focused on the film plane F within the camera body 104 is not shaken but stabilized even when the lens unit 102 is vibrated during exposure to light in taking a picture.

A coil position command signal producing means built in the controller 136 is adapted to produce coil position command signals associated to each actuating coils on the basis of the lens position command signal generated by the arithmetic operation circuits 138a, 138b. The coil position command signal is the one which indicates the positional relation between the actuating coils 120a, 120b, 120c and their respective corresponding actuating magnets 122 in the case that the image stabilizing lens 116 is moved to the position designated by the lens position command signal. Specifically, when the actuating magnets 122 in pairs with their respective actuating coils are moved to the positions designated by coil position command signals, the image stabilizing lens 116 is moved to the position where the lens position command signal instructs to move to. In this embodiment, since the actuating coil 120a is vertically above the optical axis, the coil position command signal related to the actuating coil 120a is equivalent to the horizontal component of the lens position command signal produced from the arithmetic operation circuit 138a. Also, since the actuating coil 120b is positioned lateral to the optical axis, the coil position command signal related to the actuating coil 120b is equivalent to the vertical component of the lens position command signal produced from the arithmetic operation circuit 138b. Moreover, the coil position command signal related to the actuating coil 120c is produced from the arithmetic operation circuit 140 serving as a coil position command signal producing means on the basis of the horizontal and vertical components of the lens position command signal.

On the other hand, a displacement of the actuating magnet 122 relative to the actuating coil 120a, which is determined by the magnetic sensor 124a, is amplified at a predetermined magnification by a magnetic sensor amplifier 142a. A differential circuit 144a allows for the current to flow in the actuating coil 120a at the rate in proportion to the difference between the horizontal component of the coil position command signal from the arithmetic operation circuit 138a and the displacement of the actuating magnet 122 in a pair with the actuating coil 120a from the magnetic sensor amplifier 142a. Thus, as the difference between the coil position command signal and the output from the magnetic sensor amplifier 142a is naught, no current flows in the actuating coil 120a, which results in the force activating the actuating magnet 122 also becoming naught.

Similarly, the displacement of the actuating magnet 122 relative to the actuating coil 120b, which is determined by the magnetic sensor 124b, is amplified at a predetermined magnification by a magnetic sensor amplifier 142b. A differential circuit 144b allows for the current to flow in the actuating coil 120b at the rate in proportion to the difference between the vertical component of the coil position command signal from the arithmetic operation circuit 138b and the displacement of the actuating magnet 122 in a pair with the actuating coil 120b from the magnetic sensor amplifier 142b. Thus, as the difference between the coil position command signal and the output from the magnetic sensor amplifier 142b is naught, no current flows in the actuating coil 120b, which results in the force activating the actuating magnet 122 also becoming naught.

Also similarly, the displacement of the actuating magnet 122 relative to the actuating coil 120c, which is determined by the magnetic sensor 124c, is amplified at a predetermined magnification by a magnetic sensor amplifier 142c. A differential circuit 144c allows for the current to flow in the actuating coil 120c at the rate in proportion to the difference between the coil position command signal from the arithmetic operation circuit 140 and the displacement of the actuating magnet 122 in a pair with the actuating coil 120c from the magnetic sensor amplifier 142c. Thus, as the difference between the coil position command signal and the output from the magnetic sensor amplifier 142c is naught, no current flows in the actuating coil 120c, which results in the force activating the actuating magnet 122 also becoming naught.

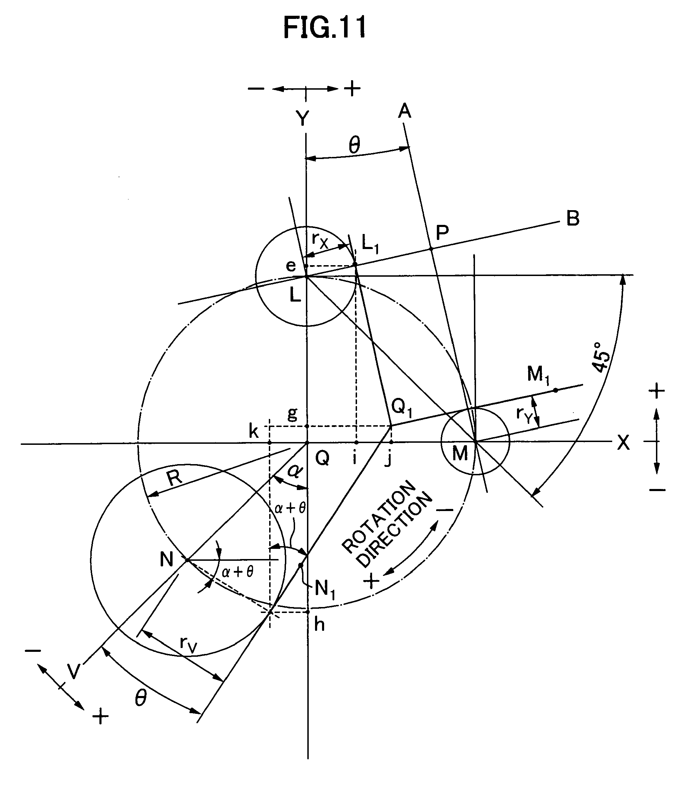

With reference to Fig. 11, described now will be the relation of the lens position command signal with the coil position command signal in the case of translating the movable frame 114. Fig. 11 is a diagram depicting positional relations of the actuating coils 120a, 120b, 120c disposed on the fixed plate 112 with three of the actuating magnets 122 deployed on the movable frame 114. First, three of the actuating coils 120a, 120b, and 120c are respectively located in points $L, M, N$ on a circle of a radius R with its center coinciding with the origin (or the point zero) $Q$ of the coordinate system. The magnetic sensors 124a, 124b, 124c are also located in such a manner that their respective centers S of sensitivity are coincident with the points $L, M, N$, respectively. When the movable frame 114 is in a neutral position, or when the center of the image stabilizing lens 116 is in the optical axis, the midpoints of the magnetic neutral axes C of the actuating magnets 122 in pairs with the actuating coils are also coincident with the points $L, M, N$, respectively. Assuming that the horizontal axis $X$ and the vertical axis Y having the origin Q in common respectively meet another axis V at 135 degrees at the origin, the actuating magnets have their respective magnetic neutral axes C coinciding with the X-, Y-, and V- axes, respectively.

Then, when the movable frame 114 is moved to cause the center of the image stabilizing lens 116 to shift to a point $Q_1$ and is further moved in the counterclockwise direction by an angle θ about the point $Q_1$, the midpoints of the magnetic neutral axes C of the actuating magnets 122 are shifted to points $L_1, M_1, N_1$, respectively. In order to shift the movable frame 114 to such a position, it is required that the coil position command signals related to the actuating coils 120a, 120b, 120c should have their respective signal levels in proportion to radii of circles which have their respective centers coinciding with the points $L, M, N$, respectively, and which are tangential to lines $Q_1L_1, Q_1M_1, Q_1N_1$, respectively. Those radii of the circles are denoted by $r_X, r_Y, r_V$, respectively.

Positive and negative conditions of the coil position command signals $r_X, r_Y, r_V$ are determined as depicted in Fig. 11. Specifically, the coil position command signal $r_X$, which is to shift the point $L_1$ to the first quadrant, is positive, while the same that is to shift to the second quadrant is negative, and similarly, the command signal $r_Y$, which is to shift the point $M_1$ to the first quadrant, is positive while the same that is to shift to the fourth quadrant is negative. In addition to that, the coil position command $r_V$, which is to shift the point $N_1$ below the V-axis, is determined as positive, while the same that is to shift above the V-axis is negative. As with positive and negative conditions for angles, the clockwise direction is given a positive sign. Thus, if the movable frame 114 is rotated from the neutral position in the clockwise direction, the coil position command signals $r_X, r_Y, r_V$ assume positive, negative, and negative, respectively.

Also, it is now assumed that the coordinates of the point $Q_1$, $L_1$, $N_1$ are (j, g), (i, e) and (k, h), respectively, and that the V- and Y-axes meet at an angle $\alpha$. Furthermore assumed is that there is an intersection P of an auxiliary line A passing the point $M$ and in parallel with the line $Q_1L_1$ with another auxiliary line $B$ passing the point $L$ and in parallel with the line $Q_1M_1$.

Applying now the law of sines to a right triangle LMP, the following equations are given:

$$\frac{\overline{LP}}{\sin(45°+\theta)} = \frac{\overline{MP}}{\sin(45°-\theta)} = \frac{\sqrt{2}R}{\sin 90°} = \sqrt{2}R \qquad \ldots(1)$$

From the above equations, obtained are the following formulae:

$$\overline{LP} = R(\cos\theta + \sin\theta) \qquad \ldots(2)$$

$$\overline{MP} = R(\cos\theta - \sin\theta) \qquad \ldots(3)$$

The coordinates $e$, $g$, $h$, $i$, $j$, and $k$ are respectively expressed by using the terms R, $r_X$, $r_Y$, $r_V$, $\theta$, and $\alpha$, as follows:

$$
\begin{aligned}
e &= -r_x \sin\theta + R \\
g &= e - (\overline{MP} - r_Y)\cos\theta = -r_X \sin\theta + r_Y \cos\theta - R\cos\theta(\cos\theta - \sin\theta) + R \\
h &= -R\cos\alpha - r_V \sin(\alpha + \theta) \\
i &= r_X \cos\theta \\
j &= i - (\overline{MP} - r_Y)\sin\theta = r_X \cos\theta + r_Y \sin\theta - R\sin\theta(\cos\theta - \sin\theta) \\
k &= -R\sin\alpha + r_V \cos(\alpha + \theta)
\end{aligned}
\qquad \ldots(4)
$$

As to a right triangle with the apexes of the coordinates (k, g), (j, g), and (k, h), a relation established can be expressed as in the following equations:

$$
\begin{aligned}
\frac{j-k}{g-h} &= \tan(\alpha + \theta) = \frac{\sin(\alpha + \theta)}{\cos(\alpha + \theta)} = \frac{\sin\alpha\cos\theta + \cos\alpha\sin\theta}{\cos\alpha\cos\theta - \sin\alpha\sin\theta} \\
&= \frac{r_X \cos\theta + r_Y \sin\theta - R\sin\theta(\cos\theta - \sin\theta) + R\sin\alpha - r_V \cos(\alpha + \theta)}{-r_X \sin\theta + r_Y \cos\theta - R\cos\theta(\cos\theta - \sin\theta) + R + R\cos\alpha + r_V \sin(\alpha + \theta)}
\end{aligned}
\qquad \ldots(5)
$$

The above equations in (5) can be expanded and rearranged as in the following equation:

$$r_X \cos\alpha - r_Y \sin\alpha - r_V = R(\sin\alpha + \cos\alpha)\sin\theta + R\sin\theta \qquad \ldots(6)$$

Besides, in case of translating the movable frame 114, $\theta = 0$ is satisfied, and the above equation (6) are reorganized as follows:

$$r_X \cos\alpha - r_Y \sin\alpha - r_V = 0 \qquad\qquad ...(7)$$

In this embodiment, also, $\alpha =45\,°$ is satisfied, and the equation (7) can be abbreviated as follows:

$$r_V = \frac{(r_X - r_Y)}{\sqrt{2}} \qquad\qquad ...(8)$$

Thus, in this embodiment, when the image stabilizing lens 116 has its center translated to the coordinates (j, g) in response to the lens position command signal, the coil position command signals $r_X$ and $r_Y$ having their respective signal levels in proportion to the coordinates $j$ and $g$ are generated for the actuating coils 120a and 120b, respectively, while the coil position command signal $r_V$ is computed by applying the equation (8), for the actuating coil 120c.

The coil position command signal $r_X$ is identical with the output signal from the arithmetic operation circuit 138a while the coil position command signal $r_Y$ is identical with the output signal from the arithmetic operation circuit 138b. Similarly, the coil position command signal $r_V$ is identical with the output signal from the arithmetic operation circuit 140, which performs an arithmetic operation equivalent to the process provided in the equation (8).

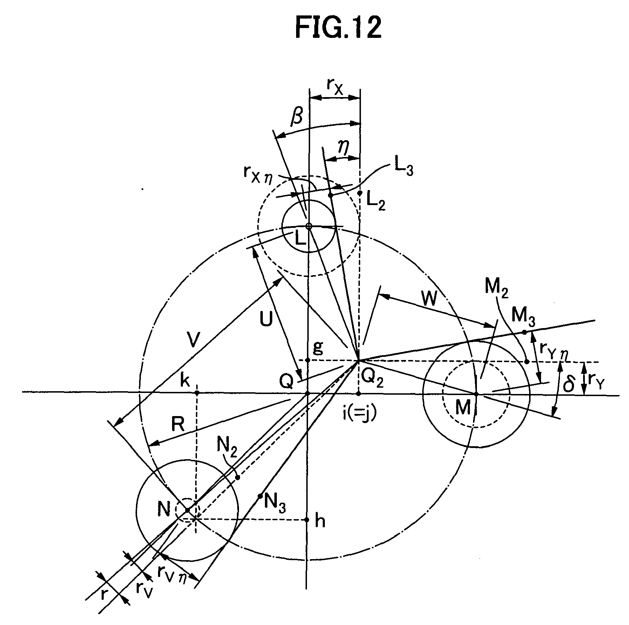

Then, referring to Fig. 12, a relation of the lens position command signal with the coil position command signal in the case of rotating the movable frame 114. Fig. 12 is a diagram illustrating the coil position command signal in the case that the movable frame 114 is translated and rotated. As can be seen in Fig. 12, first the movable frame 114 is translated to cause the center of the image stabilizing lens 116 attached to the same to shift from the point $Q$ to another point $Q_2$, and accordingly, the actuating magnets 122 mounted on the movable frame 114 are moved from the points $L, M, N$ to points $L_2, M_2, N_2$, respectively. For such translating motion, the coil position command signals $r_X, r_Y, r_V$ are produced. The signal levels of the coil position command signals can be obtained through the aforementioned equations as in (8). Now obtained will be the command signals $r_{X\eta}, r_{Y\eta}, r_{V\eta}$ in the case where the movable frame 114 is rotated about the point $Q_2$ by an angle $\eta$ in the counterclockwise direction.

Similar to the case depicted in Fig. 11, first assuming that the coordinates of the point $Q_2$ and the contact point of the line $Q_2N_2$ with a circle of radius $r_V$ with the center $N$ are (j, g) and (k, h), respectively, and replacing the term $\theta$ in the equation (4) with zero leads to the following relations:

$$g = r_Y$$
$$j = i = r_X \qquad\qquad ...(9)$$
$$k = -R \sin\alpha + r_V \cos(\alpha + \theta) = -R\frac{1}{\sqrt{2}} + r_V\frac{1}{\sqrt{2}}$$

When the movable frame 114 is rotated about the point $Q_2$ by an angle $\eta$ in the counterclockwise direction, the points $L_2, M_2, N_2$ are respectively moved to points $L_3, M_3, N_3$. It is also assumed that angles at which pairs of segments $Q_2L_2$ and $Q_2L$, $Q_2M_2$ and $Q_2M$, and $Q_2N_2$ and $Q_2N$ meet are denoted by $\beta$, $\delta$, and $\gamma$, respectively. Additionally assumed is that the segments $Q_2L$, $Q_2M$, and $Q_2N$, have their respective lengths designated as $U, W,$ and $V$. It is given that the coil position command signals $r_X\eta$, $r_Y\eta$, $r_V\eta$ have their respective signal levels equal to radii of circles having their respective center at the points $L, M, N$ and tangential with lines $Q_2L_3, Q_2M_3,$ and $Q_2N_3$, respectively, and therefore, the relations expressed as follows can be established:

$$r_{X\eta} = U\sin(\beta + \eta) = U(\sin\beta\cos\eta + \cos\beta\sin\eta)$$

$$r_{V\eta} = -V\sin(\gamma + \eta) = -V(\sin\gamma\cos\eta + \cos\gamma\sin\eta) \qquad ...(10)$$

$$r_{Y\eta} = -W\sin(\delta + \eta) = -W(\sin\delta\cos\eta + \cos\delta\sin\eta)$$

sin β , cos β and other terms can be replaced with the following expressions according to some mathematical relations;

$$\sin\beta = \frac{i}{U} = \frac{r_X}{U}$$

$$\cos\beta = \frac{R-g}{U} = \frac{R-r_Y}{U}$$

$$\sin\gamma = -\frac{r_V}{V}$$

$$\cos\gamma = \frac{\sqrt{2}(i-k)}{V} = \frac{\sqrt{2}r_X + R - r_V}{V} \qquad ...(11)$$

$$\sin\delta = \frac{g}{W} = \frac{-r_Y}{W}$$

$$\cos\delta = \frac{R-i}{W} = \frac{R-r_X}{W}$$

In addition, the relations in the equations in (11) are substituted for their respective corresponding terms in the equations in (10) to eliminate the terms like β, γ, and δ, formulae expressing the relations as follows are obtained:

$$r_{X\eta} = r_X\cos\eta + (R - r_Y)\sin\eta$$

$$r_{V\eta} = r_V\cos\eta - (\sqrt{2}r_X + R - r_V)\sin\eta \qquad ...(12)$$

$$r_{Y\eta} = r_Y\cos\eta - (R - r_X)\sin\eta$$

Thus, in order to shift the movable frame 114 to a point that is determined by first translating the center of the image stabilizing lens 116 to the coordinates (j, g) and then rotating the same about the resultant point by an angle η in the counterclockwise direction, the coil position command signals $r_X$, $r_Y$, $r_V$ are obtained through the formulae (8) and (9) above all, and then the obtained values are substituted for the corresponding terms in the formulae (12) to obtain the coil position command signals $r_{X\eta}$, $r_{Y\eta}$, $r_{V\eta}$, which are to be given for the actuating coils.

In the case where the movable frame 114 is to be rotated about the point Q by the angle η in the counterclockwise direction without the translating motion, the terms $r_X$, $r_Y$, and $r_V$ in the formulae (12) are substituted for zero as follows:

$$r_{X\eta} = R\sin\eta$$

$$r_{V\eta} = R\sin\eta \qquad ...(13)$$

$$r_{Y\eta} = -R\sin\eta$$

Thus, the coil position command signals $r_{X\,\eta}$, $r_{Y\,\eta}$, and $r_{V\,\eta}$ can be obtained through the arithmetic operations.

The controller 136 can specifically be configured by adding the exemplary circuit in Fig. 2 to each of the actuating coils. For example, in order to fabricate circuitry controlling the current to flow in the actuating coil 120a, the actuating coil 6 should be replaced with the actuating coil 120a, and output from an arithmetic operation circuit 138a should be applied as the position command signal in the circuit in Fig. 2. In such a case, a magnetic sensor amplifier 142a is a counterpart to the operational amplifier OP2 in Fig. 2, and a differential circuit 144a is an alternative to the operational amplifier OP3. The circuitry controlling the current to flow in the actuating coil 120b can similarly be configured. The current to flow in the actuating coil 120c can also be controlled by the similar circuit, but in this case, output of an arithmetic operation circuit 140 is to be connected to the plus input terminal of the operational amplifier OP4 to input the position command signal thereto. The arithmetic operation circuit 140 can consist of a differential circuit similar to the operational amplifier OP3, an electric resistance that produces voltage divided in $(1/2)^{1/2}$ of the pre-process level, and the like, so as to perform the arithmetic operation equivalent to that expressed in Equation (8).

With reference to Figs. 3 and 10, the operation of a preferred embodiment of the camera 101 according to the present invention will be described. First, turning on a start switch (not shown) for an anti-vibrating function of the camera 101 allows for the actuator 110 in the lens unit 102 to begin working. The gyros 134a and 134b built in the lens unit 102 time-varyingly detect vibrations in a predetermined frequency band, and the gyro 134a produces a signal of the angular acceleration in the yawing direction to the arithmetic operation circuit 138a while the gyro 134b produces a signal of the angular acceleration in the pitching direction to the arithmetic operation circuit 138b. The arithmetic operation circuit 138a integrates the received angular acceleration signal twice in the time quadrature process to compute a yawing angle, and the computation result is further added with a predetermined correction signal to generate the lens position command signal in the horizontal direction. Similarly, the arithmetic operation circuit 138b integrates the received angular acceleration signal twice in the time quadrature process to compute a pitching angle, and the computation result is added with a predetermined correction signal to generate the command signal of the lens position in the vertical direction. Time-varyingly moving the image stabilizing lens 116 to the positions that are instructed in the lens position command signal produced from the arithmetic operation circuits 138a, 138b on the time-varying basis, an image focused on the film plane F within the camera body 4 can be stabilized.

The command signal of the lens position in the horizontal direction produced from the arithmetic operation circuit 138a is transferred to the differential circuit 144a as the coil position command signal $r_X$ related to the actuating coil 120a. Similarly, the command signal of the lens position in the vertical direction produced from the arithmetic operation circuit 138b is transferred to the differential circuit 144b as the coil position command signal $r_Y$ related to the actuating coil 120b. The outputs from the arithmetic operation circuits 138a, 138b are transferred to the arithmetic operation circuit 140, and arithmetic operations as expressed in the formulae (8) enables to generate the coil position command signal $r_V$ for the actuating coil 120c.

On the other hand, the magnetic sensors 124a, 124b, and 124c respectively located inside the actuating coils 120a, 120b, and 120c produce detection signals to the magnetic sensor amplifiers 142a, 142b, and 142c, respectively. The detection signals detected by the magnetic sensors are, after respectively amplified in the magnetic sensor amplifiers 142a, 142b, and 142c, transferred to the differential circuits 144a, 144b, and 144c, respectively.

The differential circuits 144a, 144b, and 414c respectively generate voltages equivalent to the differences between the received detection signals from the magnetic sensors and the coil position command signals $r_X$, $r_Y$, and $r_V$ and respectively permit the currents in proportion to the voltages to flow in the actuating coils 120a, 120b, and 120c. As the currents flow in the actuating coils, the magnetic field in proportion to the currents is developed. By virtue of the magnetic field, the actuating magnets 122, which are disposed in the corresponding positions to the actuating coils, are forced to move closer to the positions designated by the coil position command signals $r_X$, $r_Y$, and $r_V$, respectively, thereby moving the movable frame 114. The actuating magnets 122, once reaching the designated positions by virtue of the coil position command signals, the output from the differential circuit turns to the zero level since the coil position command signals are equal to the detection signals, and the force to move the actuating magnets also becomes naught. As an external disturbance and/or an alteration in the coil position command signals cause the actuating magnets 122 to depart from the positions designated in the coil position command signals, the current flow is resumed in the actuating coils, which enables the actuating magnets 122 to regain the designated positions.

Time-varyingly repeating the aforementioned steps permits the image stabilizing lens 116 attached to the movable frame 114 along with the actuating magnets 122 to follow the lens position command signal to the designated position. Thus, the image focused on the film plane F within the camera body 4 is stabilized.

In the embodiment of the camera according to the present invention, since the movable frame for the image stabilizing actuator can be translated in the desired direction without using orthogonal guides leading in two different directions, and the actuator may have a simplified mechanism. Also, as a result of such a simplified mechanism, the movable frame for the actuator can reduce the weight, and this attains the actuator of a quick response.

In the second embodiment of the camera according to the present invention, the movable frame for the image stabilizing actuator can be translated and rotated in the desired directions within a predetermined plane.

Additionally, since the magnetic sensors are located inside the actuating coils, a point of action of the force applied from each actuating coil to each actuating magnet is almost identical with a point sensed as the position of the actuating magnet by the magnetic sensor, and this enables an accurate detection of the position of the movable frame without an influence of mechanical maladjustment.

Also, the controller has a built-in compensation circuit, and therefore, the effects upon the magnetic sensors due to the magnetic field from the actuating coils can be eliminated.

In the embodiment of the camera according to the present invention, an interval between the fixing plate and the movable member is kept constant by virtue of the steel balls, and the rolling of the steel balls between the fixed plate and the movable frame permits the movable member to move relative to the fixed plate, which eliminates affections of frictional resistance of sliding between the fixed plate and the movable frame located relative to the same.

Although the second embodiment of the present invention has been described, various modifications can be made to them. The present invention is applied especially to a film camera in the aforementioned second embodiments, but it can be applied to any still camera or animation picture camera such as a digital camera, a video camera, and the like. Also, the present invention can be applied to a lens unit used with a camera body of any of the above-mentioned cameras. Additionally, there are applications of the invention in use as an actuator that moves an image stabilizing lens of the camera or as an actuator that moves an XY stage or the like.

Further, in the aforementioned embodiment, the actuating coils are attached to the fixed member while the actuating magnets are attached to the movable member, and instead, the actuating magnets may be attached to the fixed member while the actuating coils are attached to the movable member. Also, in the aforementioned embodiment, three pairs of the actuating coils and the actuating magnets are used, and alternatively, four or more pairs of the actuating coils and the actuating magnets may be employed. Furthermore, in the aforementioned embodiment, permanent magnets serve as the actuating magnets, and the alternative to them may be electromagnets.

Also, in the aforementioned embodiment, three of the steel balls 118 serve as a movable member supporting means, and alternatively, the movable member supporting means may be replaced with four or more of spherical objects. Otherwise, without using any object spherical in shape, the movable member and the fixed member may have their respective contact surfaces finished in smooth conditions to let the movable member and the fixed member in direct contact with the same slide on each other.

Additionally, in the aforementioned embodiment, the actuating coils are disposed so that pairs of the actuating coils 124a and 124b, 124c and 124a, and 124b and 124c, meet each other at the central angle of 90 degrees, 135 degrees, and 135 degrees, respectively, and alternatively, the position of the actuating coil 124c may be determined so that the central angle at the intersection of the actuating coil 124b with the actuating coil 124c is in the range as expressed in the formula $90 + \alpha$ $(0 \le \alpha \le 90)$. Otherwise, the central angle at the intersection of the actuating coils 124a and 124b may be any angle other than 90 degrees as desired, and three of the actuating coils meet one another at the central angle ranging from 90 degrees to 180 degrees such as 120 degrees at all the three central angles made by three of the actuating coils.

Moreover, in the aforementioned second embodiment, the magnetic neutral axes of the actuating magnets extend all in the radial direction, and alternatively, they may be directed in any way as desired. Preferably, at least one of the actuating magnets is disposed with its magnetic neutral axis extended in the radial direction.

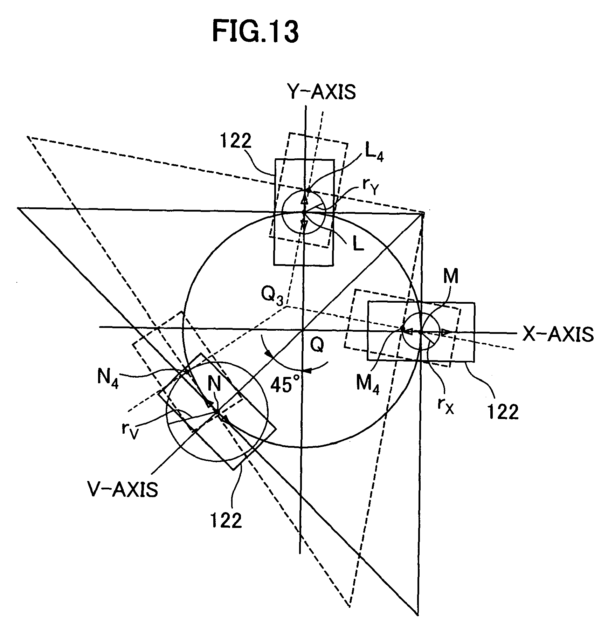

Fig. 13 depicts a modification of the aforementioned embodiment of the present invention where the magnetic neutral axes of the actuating magnets 122 respectively in pairs with the actuating coils 124a and 124b extend as the tangential line to the circle centered at the point $Q$ while the magnetic neutral line of the remaining magnet 122 in a pair with the actuating coil 124c extends coincidental with a radius of the circle. Although omitted in the drawings, the actuating coils, 124a, 124b, 124c are located in the points $L, M$ and N, respectively. In this example, the coil position command signals $r_X$, $r_Y$, and $r_V$ are produced in relation with the actuating coils 124a, 124b and 124c to instruct where to move those magnets from their respective current positions $L$, $M$, and $N$. Due to the coil position command signals, the midpoints of the magnetic neutral axes of the actuating magnets 122 on the points $L, M, N$ in the case of the movable frame 114 located in its neutral position are shifted to the points $L_4$, $M_4$ and $N_4$, respectively, and simultaneously, the center of the image stabilizing lens 116 is shifted from the point $Q$ to the point $Q_3$.

In this modification, the coil position command signal $r_X$, namely, the horizontal component of the lens position command signal is provided to the actuating coil 124b on the point M while the coil position command signal $r_Y$, namely, the vertical component of the lens position command signal is provided to the actuating coil 124a on the point L. Also, in the case depicted in Fig. 12, substituting the coil position command signals $r_X$ and $r_Y$ for the corresponding terms in the formula (8), the coil position command signal $r_V$ thus obtained is given in relation with the actuating coil 124c, which resultantly, causes the point Q to translate by $-r_X$ and $+r_Y$ along the X- and Y-axes, respectively.

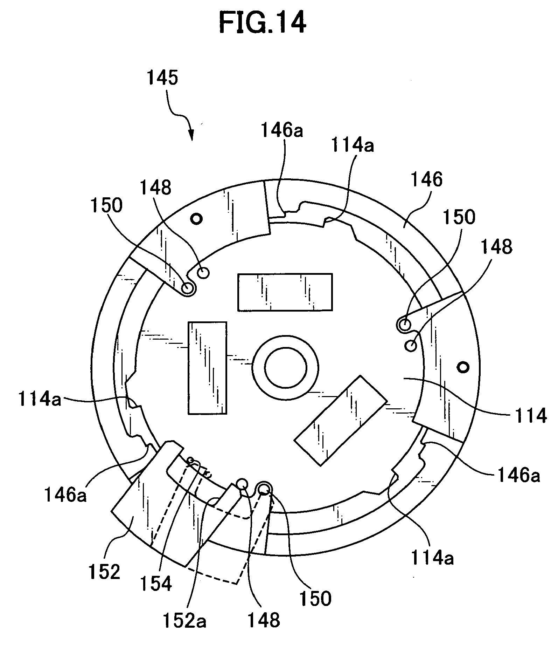

Then, referring to Fig. 14, another modification of the embodiment according to the present invention will be described. This embodiment is different from the aforementioned ones in that an actuator 145 has a locking mechanism anchoring the movable frame 114 to the fixed plate 112 when there is no need of controlling the movable frame 114. As can be seen in Fig. 14, the actuator 145 in this embodiment is provided with three engagement projections 14a in the outer circumference of the movable frame 114. The fixed plate 112 is also provided with an annular member 146 surrounding the movable frame 114, and the annular member 146 has three engagement elements 146a in the inner circumference thereof so as to mate with the engagement projections 114a, respectively. In addition, the movable frame 114 is provided with three movable member holder magnets 148 in its outer circumference. The annular member 46 has three fixed plate holder magnets 150 in positions corresponding to the movable member holder magnets 148 in the inner circumference, so that both groups of the magnets develop magnetic force and affect each other on the one-on-one basis. Moreover, a manual locking element 152 extends from the outside of the annular member 146 inwardly in the radial direction, and it can move along the circumference direction of the annular member 146. The manual locking element 152 has its tip machined in a U-shaped dent 52a. An engagement pin 54 resides on the outer circumference of the movable frame 114 so that it is received in the U-shaped dent 152a and engaged with the manual locking element 152.

An operation of the actuator 145 will be detailed. First, the movable frame 114 of the actuator 145 is rotated in the counterclockwise direction in Fig. 14, and as a consequence, the engagement projections 114a in the outer circumference of the movable frame 114 respectively come in engagement with the engagement elements 1146a in the annular member 146, thereby anchoring the movable frame 114 to the fixed plate 112. Additionally, the movable member holder magnets 148 residing in the movable frame 114 and the fixed member holder magnets 150 in the annular member 146 hardly affect each other in the situation as shown in Fig. 14. As the movable frame 114 is rotated in the counterclockwise direction and carries the movable member holder magnets 148 closer to the fixed member holder magnets 150, the fixed member holder magnets 150 applies magnetic force to the movable frame 114 to rotate it in the clockwise direction. Repelling the magnetic force, the movable frame 114 is further rotated in the counterclockwise direction till the movable member holder magnets 148 pass by the fixed member holder magnets 150, and consequently, the fixed member holder magnets 150 applies magnetic force to the movable frame 114 to rotate it in the counterclockwise direction. The magnetic force urges the engagement projections 114a to press themselves against the engagement elements 146a, and thus, the engagement projections 114a and the engagement elements 146a remain mated with each other. In this way, during stopping the power supply to the actuator 145, the stable engagement of the engagement projections 114a and the engagement elements 146a is guaranteed, the movable frame 114 being anchored to the fixed plate 112.

When the manual locking element 152 is manually rotated in the counterclockwise direction in Fig. 14, the engagement pin 154 on the movable frame 114 is hooked in the U-shaped dent 152a, and the movable frame 114 is also rotated in the counterclockwise direction. In this manner, the engagement projections 114a and the engagement element 146a can be manually get tied with each other. When the manual stop member 154 is manually rotated reversely, or in the clockwise direction, the movable frame 114 is rotated in the clockwise direction, and this force the engagement projections 114a and the engagement elements 146a to disconnect from each other.

The exemplary actuator according to the present invention is capable of rotating the movable frame, and this facilitates the implementation of the locking mechanism as described in this modification.

**[BRIEF DESCRIPTIONS OF THE DRAWINGS]**

Fig. 1(a) is a side view showing a first embodiment of an actuator according to the present invention, and Fig. 1(b) is a bottom view;

Fig. 2 is a circuit diagram showing an example of circuitry for a controller controlling current to flow in actuating coils;

Fig. 3 is a sectional view showing a second embodiment of a camera according to the present invention;

Fig. 4 is a partially cut-out frontal partial sectional view showing an actuator used in the second embodiment of the camera according to the present invention;

Fig. 5 is a cross-sectional view taken along the line A-A in Fig. 4, showing the actuator used in the second embodiment of the camera according to the present invention;

Figs. 6 is a sectional view showing an upper portion of the actuator used in the second embodiment of the camera according to the present invention;

Figs. 7(a) and 7(b) are partially enlarged top plan and frontal views illustrating mutual relations of actuating coils, actuating magnets, back yokes, and attracting yokes;

Figs. 8 and 9 are diagrams illustrating a relation between the movement of the actuating magnet and the signals generated by the magnetic sensor;

Fig. 10 is a block diagram illustrating the signal process on the controller;

Fig. 11 is a diagram illustrating a positional relation of the actuating coils disposed on the fixed plate and three actuating magnets disposed on the movable frame;

Fig. 12 is a diagram illustrating coil position command signals upon translating and rotating a movable frame;

Fig. 13 is a diagram depicting a modification of the actuator used in the second embodiment of the camera according to the present invention; and

Fig. 14 is a diagram depicting another modification of the actuator used in the camera according to the present invention.

**Claims**

1. An actuator comprising:

a fixed member;
a movable member;
a movable member supporting means for supporting the movable member relative to the fixed member;
an actuating coil attached to either one of the fixed member and the movable member;
an actuating magnet attached to the remaining one of the fixed member and the movable member in positions so as to receive drive force when current flows in the actuating coils;
a magnetic sensor disposed inside windings of the actuating coil for detecting positions of the actuating magnet; and
a control means for controlling the drive current to flow in each of the actuating coil in response to a signal instructing where to move the movable member and position signal detected by the magnetic sensor.

2. The actuator according to claim 1, wherein the movable member supporting means supports the movable member so as to permit the movable member to move to an arbitrary position in a plane in parallel with the fixed member, the actuator comprising at least three actuating coils attached to either one of the fixed member and the movable member, actuating magnets attached to the remaining one of the fixed member and the movable member in positions corresponding to the actuating coils, and magnetic sensors disposed inside windings of the actuating coils for detecting relative positions of the actuating coils to the actuating magnets, wherein the control means is adapted to produce a coil position command signal related to each of the actuating coils on the basis of a command signal to instruct where the movable member is to be moved, and to control the drive current to flow in each of the actuating coils in response to the coil position command signal and position signals detected by the magnetic sensors.

3. An actuator according to claim 1 or claim 2, further comprising a compensating means for correcting the position signal(s) detected by the magnetic sensor(s) so as to eliminate effects upon the magnetic sensor(s) due to the magnetic field derived from the actuating coil(s).

4. An actuator according to claim 3, wherein the compensating means has a current sensing means for detecting current flowing in the actuating coil(s), and producing compensation signal(s) from the current detected by the current sensing means so as to correct the position signal(s) detected by the magnetic sensor(s).

5. An actuator according to claim 4, wherein the current to flow in the actuating coil(s) is pulse width modulated or pulse density modulated, and the compensating means has a smoothing means for smoothing the pulse width modulated current or the pulse density modulated current detected by the current sensing means to produce the compensation signal(s).

6. A lens unit comprising an actuator according to any of the preceding claims;
a lens barrel; and
a photographing lens housed in the lens barrel, wherein
the fixed member is secured to the lens barrel, and wherein
the movable member carries an image stabilizing lens.

7. A lens unit according to claim 6, when dependent on claim 2, further comprising:

a vibration sensing means for detecting vibrations of the lens barrel; and
a signal generating means for producing a lens position command signal to instruct where the image stabilizing lens is to be moved on the basis of a detection signal from the vibration sensing means, wherein
the control means is adapted to produce coil position command signals related to the or each of the actuating coils on the basis of the lens position command signal from the signal generating means.

8. A camera including a lens unit according to claim 6 or claim 7.

# FIG.1A

# FIG.1B

FIG.2

# FIG.3

EP 1 672 774 A2

## FIG.4

## FIG.5

## FIG.6

# FIG.7A

114  128                122

N                               S

S                               N

112     126     124a

# FIG.7B

C

120a

122

S          N

# FIG.8

122          C

S
124a

Y-AXIS DIRECTION

X-AXIS DIRECTION

FIG.9A

FIG.9B

FIG.9C

FIG.9D

FIG.9E

FIG.9F

## FIG.10

EP 1 672 774 A2

# FIG.11

# FIG.12

# FIG.13

# FIG.14